(19) **Europäisches Patentamt**
European Patent Office
Office européen des brevets

(11) **EP 2 670 591 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**12.06.2019 Patentblatt 2019/24**

(45) Hinweis auf die Patenterteilung:
**23.07.2014 Patentblatt 2014/30**

(21) Anmeldenummer: **13718133.5**

(22) Anmeldetag: **26.03.2013**

(51) Int Cl.:
***B32B 5/32*** *(2006.01)*   ***B32B 3/18*** *(2006.01)*
***B29C 65/02*** *(2006.01)*   ***B29C 44/56*** *(2006.01)*

(86) Internationale Anmeldenummer:
**PCT/EP2013/056374**

(87) Internationale Veröffentlichungsnummer:
**WO 2013/144130 (03.10.2013 Gazette 2013/40)**

(54) **STRUKTURELEMENT UND VERFAHREN ZU DESSEN HERSTELLUNG**

STRUCTURAL ELEMENT AND METHOD FOR THE PRODUCTION THEREOF

ÉLÉMENT STRUCTURAL ET PROCÉDÉ DE FABRICATION ASSOCIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.03.2012 DE 102012102603**
**28.03.2012 DE 102012102689**

(43) Veröffentlichungstag der Anmeldung:
**11.12.2013 Patentblatt 2013/50**

(73) Patentinhaber: **Airex AG**
**5643 Sins (CH)**

(72) Erfinder:
• **RAKUTT, Dietmar**
**6330 Cham (CH)**

• **GAUL, Martin**
**5244 Birrhard (CH)**

(74) Vertreter: **Patentanwälte Behrmann Wagner PartG mbB**
**Maggistraße 5**
**Hegau-Tower (10. OG)**
**78224 Singen (DE)**

(56) Entgegenhaltungen:
EP-A1- 0 873 827    EP-A1- 1 393 892
EP-A1- 2 153 982    EP-A2- 1 688 237
WO-A1-91/03372     WO-A1-2004/024434
DE-A1- 2 136 573    DE-A1- 3 627 236
DE-A1- 4 336 293    DE-T2-602006 000 081
GB-A- 843 483       GB-A- 2 474 431
US-A- 4 137 348     US-A- 5 992 633

EP 2 670 591 B2

**Beschreibung**

Die Erfindung betrifft ein Strukturelement zum Einsatz als Kernschicht in einem Sandwich-Verbundelement gemäß dem Oberbegriff des Anspruchs 1, ein Sandwich-Verbundelement, insbesondere zur Herstellung von Windflügeln für Windkraftanlagen und/oder für Anwendungen im Bereich Marine (insbesondere bei zur Herstellung von Bootsrümpfen und Bootsdecks) im Bereich Schienenverkehr (Zugfronten, Dächer, Böden, Wandelemente von Eisenbahnwaggons), im Massentransport auf der Straße (Busdächer, - böden, - fronten), für strukturelle Anwendungen im Baubereich (z.B. Dächer) gemäß Anspruch 15 sowie ein Verfahren zum Herstellen eines derartigen Strukturelementes gemäß dem Oberbegriff des Anspruchs 10.

Aus der DE 60 2006 000 081 T2 ist ein Verfahren zum Herstellen eines Strukturelementes bekannt, wobei extrudierte Polysterolschaumelemente mit einer geschlossen-zelligen Struktur zum Herstellen eines Blocks durch Verschweißen miteinander verbunden werden. Der Block wird dann in einzelne Elemente, beispielsweise mittels Heißdrahtschneiden unterteilt.

In der EP 1 536 944 B2 ist ein gattungsgemäßes Strukturelement beschrieben, welches geeignet und bestimmt ist zum Einsatz als Kernschicht in einem Sandwich-Verbundelement zur Herstellung von Windflügeln in Windkraftanlagen. Das bekannte Strukturelement zeichnet sich aus durch eine Mehrzahl von in einer Ebene nebeneinander angeordneten und miteinander verbundenen Körpersegmenten aus Polyethylenterephthalat (PET), wobei die Körpersegmente an ihren anstoßenden Seitenflächen unter Ausbildung von flächigen, in einer Draufsicht auf eine Flächenseite des Strukturelementes sich kreuzenden Schweißnähten verschweißt sind, wobei die flächigen Schweißnähte eine porenarme oder porenfreie Kunststoffzwischenschicht aus aufgeschmolzenem Kunststoff der Körpersegmente in Form einer netzartigen, versteifend wirkenden Stegstruktur ausbilden.

Das bekannte flächenförmige Strukturelement wird erhalten, indem ein Schaumstoffblock, umfassend die Vielzahl von miteinander verschweißten Körpersegmenten senkrecht zu der Flächenerstreckung der sich kreuzenden Schweißnähte durch Sägen in eine Vielzahl von plattenförmigen Strukturelementen unterteilt wird. Das so erhaltende Strukturelement wird zu einem Sandwich-Verbundelement verarbeitet, indem die durch Sägen aus einem Schaumstoffblock gebildeten Flächenseiten jeweils mit einer Deckschicht (z.B. Aluminiumblech) unter Verwendung von Klebeharz verklebt werden oder mit einer faserverstärkten Harz-Deckschicht ohne weitere Klebschicht direkt laminiert wird. Die bekannten Strukturelemente haben sich als Kernschichten in solchen Sandwich-Verbundelementen bewährt. Es bestehen jedoch Bestrebungen die Harzaufnahme des Strukturelementes, insbesondere bei gleichbleibender Haftkraft der Deckschicht zu reduzieren, um hierdurch ein Sandwich-Verbundelement mit einer geringeren Gesamtdichte und damit bei gleichem Volumen mit einem geringeren Gewicht bei gleicher mechanischer Belastbarkeit zu erhalten. Insbesondere bei dem Laminierverfahren, bei welchem das Laminierharz mit Hilfe von Vakuum in die Schichtanordnung gesogen wird, ist eine verringerte Harzaufnahme von besonderem Interesse, da das Laminierharz auf Grund der Vakuumbeaufschlagung die Tendenz hat, sämtliche erreichbaren Hohlräume aufzufüllen und somit einen vergleichsweise großen Anteil am Gesamtgewicht hat.

Aus der sich nicht mit PET-Schäumen beschäftigenden WO 2005/047377 A1 wird als Lösung für ein ähnliches Problem angeboten, den Schaum feinporiger zu gestalten. Dies führt jedoch letztendlich zu einer ungenügenden Haftung bzw. Klebewirkung zwischen einem Strukturelement und einer Deckschicht.

In der WO 2004/007600 A1, die sich ebenfalls nicht mit PET-Schäumen beschäftigt, ist ein weiterer Lösungsweg beschrieben, wonach das geschäumte Material unter Anwendung von Druck und Temperatur verdichtet wird. Dies führt jedoch zu Schäumen mit vergleichsweiser hoher Dichte und macht das Herstellungsverfahren aufgrund des zusätzlich notwendigen Arbeitsschrittes unwirtschaftlich.

Die US 2005/0060895A1 beschäftigt sich mit der Herstellung von Surfbrettern aus mehreren geschäumten Strukturelementen aus Polystyrol, wobei die Strukturelemente in einem gemeinsamen Verfahrensschritt verformt und miteinander verschweißt werden. Aus der Druckschrift ist es bekannt, zur Formgebung der miteinander verschweißten Strukturelemente Heißdrahtschneiden einzusetzen.

Die US 6,213,540 A1 beschreibt ein Verfahren zur Herstellung von Energieabsorbtionsartikeln bei denen ein Schaumstoffblock mit einem Netz aus Heißdrähten durchfahren wird, um somit innerhalb des Blocks die Struktur stärkende Schweißnähte zu erzeugen. Auch diese Druckschrift beschäftigt sich nicht mit der Reduzierung der Harzaufnahme.

Aus der GB 2474431A ist ein Verfahren zum Herstellen eines Strukturelementes zur Verwendung als Kernschicht in einem Sandwich-Verbundelement beschrieben, wobei zunächst Kunststoffschichten übereinander extrudiert werden, und wobei die jeweils untere Schicht vor dem Aufextrudieren der nachfolgenden Schicht mittels eines Infrarotstrahlers erhitzt wird, sodass sich die Schichten innig miteinander verbinden. Die Schichtanordnung wird sodann mittels Heißdrahtschneiden in große Blöcke unterteilt, die dann wiederum durch Heißdrahtschneiden in plattenförmige Strukturelemente unterteilt werden. Die Druckschrift beschäftigt sich nicht mit dem Problem der Verringerung der Harzaufnahme des Strukturelementes bei seiner Weiterverarbeitung zu einem Sandwich-Verbundelement.

Ausgehend von dem vorgenannten Stand der Technik liegt der Erfindung die Aufgabe zugrunde, ein zur Verwendung als Kernschicht in einem Sandwich-Verbundelement geeignetes Strukturelement anzugeben, das so beschaffen ist, dass die Harzaufnahme, insbesondere bei zumindest näherungsweise gleichbleibender Deckschicht-Haftung zu einer mit dem Strukturelement verbindbaren Deckschicht reduziert wird. Bevorzugt soll dieses Ziel erreicht werden ohne zusätzliche Arbeitsschritte und ohne maßgebliche Dichteerhöhung des Strukturelementes.

Ferner besteht die Aufgabe darin, ein Verfahren zum Herstellen eines solchen Strukturelementes anzugeben sowie ein Sandwich-Verbundelement mit einem solchen Strukturelement als Kernschicht.

Diese Aufgabe wird hinsichtlich des Strukturelementes mit den Merkmalen des Anspruchs 1, hinsichtlich des Verfahrens mit den Merkmalen des Anspruchs 10 und hinsichtlich des Sandwich-Verbundelementes mit den Merkmalen des Anspruchs 15 gelöst. Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Zur Vermeidung von Wiederholungen sollen vorrichtungsgemäß offenbarte Merkmale als verfahrensgemäß offenbart gelten und beanspruchbar sein. Ebenso sollen verfahrensgemäß offenbarte Merkmale als vorrichtungsgemäß offenbart gelten und beanspruchbar.

Die Erfindung hat erkannt, dass die Oberflächenbeschaffenheit der ersten Flächenseite (und vorzugsweise auch einer zweiten, zur ersten Flächenseite parallelen Flächenseite), mit welcher das, bevorzugt plattenförmige, Strukturelement mit einer Deckschicht zu einem Sandwich-Verbundelement verklebbar bzw. laminierbar ist, kritisch ist für die Harzaufnahme, da das Harz, insbesondere ein Klebe- oder Laminierharz, durch die durch den Trennschritt zum Heraustrennen, d.h. Abtrennen des Strukturelementes aus einem Schaumstoffblock geöffneten Poren des, vorzugsweise ansonsten überwiegend geschlossenzelligen, Schaumstoffs geöffneten Poren in das Strukturelement eindringen kann, wobei das Klebe- bzw. Laminierharz, insbesondere ein Polyesterharz, Vinylesterharz, Epoxyharz oder Phenolharz ab einer gewissen Eindringtiefe und damit Eindringmenge sich nicht mehr positiv auf die Klebewirkung auswirkt, sondern stattdessen nur das Gewicht des Strukturelementes erhöht, was nachteilig ist für die Leichtbauanwendungen, in denen ein mit einem solchen Strukturelement gebildetes Sandwich-Bauteil als tragendes Konstruktionsbauteil eingesetzt werden soll. Die Erfindung hat weiter erkannt, dass eine glatte, porenfreie Oberfläche sich ebenfalls nachteilig auf die Deckschicht-Haftung auswirkt, da sich das Klebeharz nicht ausreichend in dem Strukturelement verankern kann. Zur Lösung der Aufgabe schlägt die Erfindung daher vor, die Oberfläche der ersten Flächenseite des Strukturelementes so zu beschaffen, dass diese offene Poren aufweist, die für die gewünschte Verankerung des Harzes in dem Strukturelement Sorge tragen, wobei jedoch wesentlich ist, dass ein Teil der Oberfläche thermisch versiegelt, d.h. verschlossen ist, um die Harzaufnahme zu reduzieren. Dieser Effekt beruht darauf, dass aufgrund der partiellen thermischen Versiegelung der Oberfläche weniger Poren zum Eindringen von Harz zur Verfügung stehen als bei einem Strukturelement gemäß dem Stand der Technik, bei welchem die erste Flächenseite durch Sägen erzeugt wurde. Eine Oberfläche, die diese Merkmale erfüllt ist erfindungsgemäß herzustellen durch Heißelementschneiden, insbesondere Heißdrahtschneiden, bevorzugt in dem das Strukturelement durch Heißelementschneiden aus einem Schaumstoffblock abgetrennt wird, wobei der Heißelementschneidprozess so zu führen ist, dass die Oberfläche nicht vollständig versiegelt wird, sondern offene Poren bleiben, um eine Verankerung des Harzes zu ermöglichen.

Ein Indikator für eine korrekte Verfahrensführung des Heißelementschneidvorgangs bzw. für eine Oberfläche der ersten und/oder zweiten Flächenseite des Strukturelementes, die sich durch eine geringe Harzaufnahme bei gleichzeitiger guter Deckschicht-Haftung auszeichnet ist der im folgenden noch näher erläuterte Glanzwert der Oberfläche der ersten und gegebenenfalls auch der zweiten Flächenseite, gemessen bei 60° nach DIN 67530-1982. Dieser soll erfindungsgemäß zwischen 2 und 10 Glanzeinheiten betragen.

Bevorzugt wird zur Herstellung von Sandwich-Verbundelementen, bevorzugt im Infusionsverfahren, ein Polyesterharz, Vinylesterharz, Epoxyharz oder Phenolharz eingesetzt. Der Einsatz eines Heißschneidelementes ist auf den ersten Blick nachteilig, da der Schneidvorgang ein Vielfaches länger dauert als mit einer im Stand der Technik eingesetzten Säge.

Wie zuvor erläutert beträgt ein Glanzwert der Oberfläche der ersten Flächenseite, vorzugsweise auch der Glanzwerte der Oberfläche einer dazu parallelen zweiten Flächenseite, gemessen bei 60° nach DIN 67530-1982 zwischen 2 und 10 Glanzeinheiten, vorzugsweise zwischen 2 und 8 Glanzeinheiten, noch weiter bevorzugt zwischen 3 und 6 Glanzeinheiten. 100 Glanzeinheiten entsprechen dabei einem Glasreferenzkörper. (plane, polierte schwarze Glasplatte). Bei der Messung des Glanzwertes ist darauf zu achten, dass die Einstrahlungsrichtung parallel zur Schnittrichtung beim Heißelementschneiden erfolgt. Der Verwendung des Glanzwertes als Parameter zur Beschreibung der Oberfläche der ersten und vorzugsweise auch der zweiten Flächenseite liegt der Gedanke zugrunde, dass eine zu wenige Poren aufweisende, insbesondere vollständig versiegelte Oberfläche, die eine zu geringe Harzaufnahme aufweist, einen zu hohen Glanzwert erreicht, der dann mit einer schlechten Haftwirkung einhergeht und auf der anderen Seite eine zu stark poröse Oberfläche, wie diese im Stand der Technik durch Sägen erhalten wird, einen zu niedrigen Glanzwert aufweist, der zwar mit einer guten Haftung, jedoch mit einer zu hohen Harzaufnahme einhergeht.

Die Bestrebung zum Erhalten eines oberflächenoptimierten Strukturelementes laufen den Bestrebungen zur zeitlichen Optimierung eines Heißelementschneidprozesses entgegen, da der Fachmann üblicherweise zur Optimierung eines Heißelementschneidprozesses sowohl die Temperatur als auch die Vorschubgeschwindigkeit maximiert, wohingegen zum Erhalten einer erfindungsgemäßen Oberfläche mit den angegebenen Glanzeinheiten mit einer möglichst geringen Heißelementtemperatur gearbeitet werden muss, was dann in einem größeren Widerstand und folglich auch einer geringeren Vorschubgeschwindigkeit und im Ergebnis in einem vergleichsweise langsamen Heißelementschneidprozess resultiert, der jedoch zu einer gewünschten Oberflächenbeschaffenheit, die ausreichend, jedoch nicht zu einem zu hohen Grad versiegelt ist, um einerseits die Harzaufnahme zu reduzieren und gleichzeitig eine (noch) gute Haftung sicherzustellen.

Das erfindungsgemäße Strukturelement zeichnet sich durch eine geringere Harzaufnahme bei guten Haft- bzw. Klebeeigenschaften bzw. Festigkeit im Verbund mit einer an der ersten Flächenseite festgelegten Deckschicht auf. Bevorzugt umfasst das Strukturelement umfassende Sandwich-Verbundelement nicht nur eine Deckschicht, sondern zwei parallele Deckschichten, die das Strukturelement zwischen sich aufnehmen, wobei noch weiter bevorzugt jede Deckschicht an einer Flächenseite festgeklebt oder im Infusionsverfahren anlaminiert ist, deren Oberfläche durch Heißelementschneiden erzeugt ist, derart, dass die Oberfläche teilweise thermisch versiegelt ist, also noch offene Poren aufweist. Bevorzugt handelt es sich bei den Deckschichten um glasfaserverstärkten Kunststoff, wobei noch weiter bevorzugt das das Glasfasermaterial durchdringende Harz gleichzeitig das die Verbindung zum Strukturelement herstellende Harz ist.

Das Strukturelement zeichnet sich ferner dadurch aus, dass es im Sandwich-Verbundelement tragende Funktionen übernimmt, weshalb es insbesondere eine Druckfestigkeit von mindestens 0,7 MPa einen Druckmodul von mindestens 30 MPa, eine Schubfestigkeit von mindestens 0,4 MPa sowie einen Schubmodul von mindestens 10 MPa aufweisen sollte.

Das erfindungsgemäße Strukturelement eignet sich insbesondere als Kernschicht in einem im Infusionsverfahren hergestellten Sandwich-Verbundbauteil, bei welchem das Strukturelement mit vorzugsweise beidseitig angeordnetem Gelege bzw. Gewebe im trockenen Zustand aufgebaut und anschließend mit flüssigem Laminierharz aus einem Vorratsbehälter getränkt wird, wobei das Laminierharz mit Hilfe von Vakuum in den Schichtaufbau gesaugt wird. Bevorzugt ist das die Deckschichten mit dem Strukturelement verbindende Harz gleichzeitig auch das Deckschichtenharz, mit welchem das Gelege bzw. Gewebe, insbesondere Glasfasermatten getränkt werden/sind.

Als besonders vorteilhaft hat sich herausgestellt, wenn ein Flächenteil zwischen etwa 35% und etwa 85%, vorzugsweise zwischen etwa 40% und etwa 75% der ersten und vorzugsweise auch der zweiten Flächenseite thermisch versiegelt ist.

Besonders bevorzugt ist es, wenn die Dichte des Strukturelementes aus einem Wertebereich zwischen 50 kg/m$^3$ und 250 kg/m$^3$, noch weiter bevorzugt zwischen 60 kg/m$^3$ und 150 kg/m$^3$ gewählt ist.

Ganz besonders bevorzugt handelt es sich bei dem extrusionsgeschäumten thermoplastischen Material um Polyethylenterephthalat (PET). Besonders bevorzugt beträgt die mittlere Porengröße (in Bereichen außerhalb von Schweißnähten) zwischen 0,1 mm und 1,0 mm, bevorzugt zwischen 0,2 mm und 0,8 mm. Ganz besonders bevorzugt ist es, wenn der Schaumstoffblock, aus dem ein erfindungsgemäßes Strukturelement heraustrennbar ist, hergestellt ist nach einem in der EP 1 536 944 B2 hergestellten Verfahren, wobei zur Trennung des Strukturelementes aus dem Schaumstoffblock anstelle der in der EP 1 536 944 B2 verwendeten Säge eine Heißelementschneidvorrichtung, insbesondere eine Heißdrahtschneidvorrichtung einzusetzen ist, um die Oberfläche der ersten und vorzugsweise auch einer zweiten parallelen Flächenseite gemäß dem Konzept der Erfindung auszubilden.

Die EP 1 536 944 B2 soll im Hinblick auf die dort offenbarten Verfahrensmerkmale zur Herstellung des Schaumstoffblockes sowie im Hinblick auf dort offenbarte Materialparameter als zur Erfindung im Rahmen einer Weiterbildung gehörig offenbart und in die Anmeldung mit einbezogen gelten.

Ganz besonders bevorzugt ist die Oberfläche der ersten Flächenseite so geschaffen, dass die Harzaufnahme auf der ersten Flächenseite (bzw. in die erste Flächenseite hinein) weniger als 600 g/m$^2$ beträgt und/oder zwischen 100 g/m$^2$ und 600 g/m$^2$, vorzugsweise zwischen 150 g/m$^2$ und 500 g/m$^2$ gewählt ist. Die Harzaufnahme ist die Menge (das Gewicht) an Harz, welches pro Flächenabschnitt der ersten Flächenseite in dem Strukturelement durch die offenen Poren hindurch aufgenommen wird. Eine Möglichkeit zur Bestimmung der Harzaufnahme wird im Folgenden beschrieben:

Die Harzaufnahme erfolgt durch Bestimmung der Dichte des Strukturelementes vor und nach der Infusion mit einem Harz. Um eingedrungenes Harz besser sichtbar zu machen wird dieses bevorzugt eingefärbt. Als Harz zur Durchführung der Messung kommt bevorzugt folgende Harzzusammensetzung zur Anwendung, wobei es sich bei den Harzbestandteilen um Produkte der Firma Walter Mäder AG, 8956 Killwangen, handelt. Die Artikel-Nummern sind in Klammern angegeben:

100 Teile Polyesterharz Crystic 192 LV (Art.-Nr. 900.0.0.0007),
2 Teile Härter M60 (Art.-Nr. 891.2.0.0002),
1 Teil Beschleuniger 0,4 % CO (Art.-Nr. 892.0.0.0001),
1,5 Teile Crystic Pigment Paste Orange (Art.-Nr. 910.0.4.3290) sowie
0,04 Teile Inhibitor BBK 10 % (Art.-Nr. 895.0.0010).

Der vorzugsweise aus einem größeren Strukturelement herausgeschnittene Probenkörper hat bevorzugt folgende Maße: Länge 200mm, Breite 200mm, Dicke 20mm, wobei pro Strukturelement drei Muster zu prüfen und der Mittelwert zu bilden ist.

Von jedem einzelnen Probekörper ist die Rohdichte Rd1 in $kg/m^3$ durch genaue Wägung und Volumenbestimmung durch Abmessen mit einem Messschieber zu bestimmen.

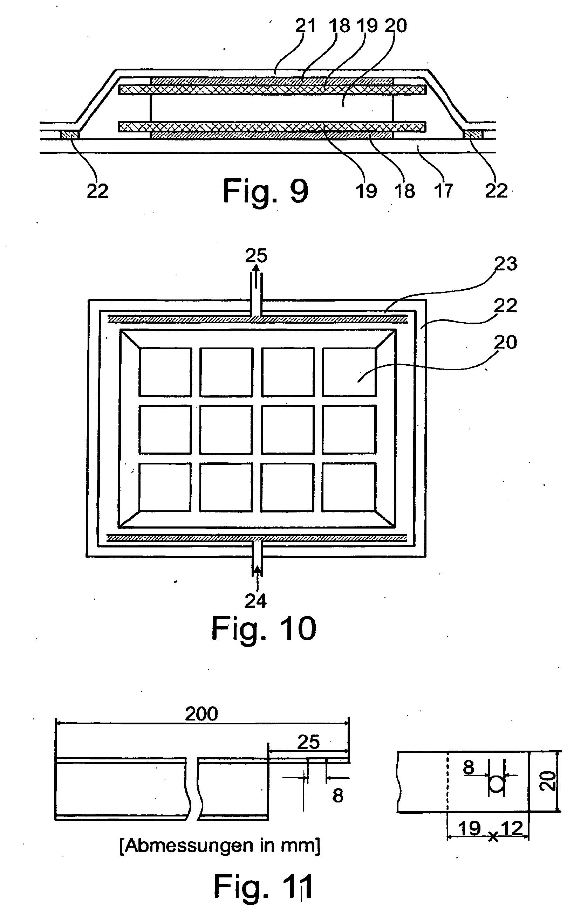

Für die Harz-Infusion wird der in Fig. 9 beschriebene Aufbau verwendet. Auf einer Glasplatte 17 werden von unten nach oben folgende Materialien aufeinander geschichtet:

- Unifilo 450 g/m2 Endlosmatte aus Glasfasern 18, Fa. Bolleter + Co. AG, 9320 Arbon
- Release Ply F Polyester-Abreißgewebe blau 19, Fa. Suter-Kunststoffe AG, 3312 Fraubrunnen
- Probenkörperlage mit abgeschrägten Leisten am Rande und Leisten zwischen den Probenkörpern aus XPVC C70.55 Schaumstoff 20
- Release Ply F Polyester-Abreißgewebe (blau) 19
- Unifilo 450 g/m2 Endlosmatte aus Glasfasern 18
- VAP Folie 21, Fa. Aero Consultants Ltd, 8606 Nänikon

Für die Probenkörperlage hat sich eine Anordnung von 4 x 3 Probekörpern gemäß Fig. 10 bewährt. Die Probekörper der zu untersuchenden Strukturelemente sind zufällig zu verteilen.

Der Aufbau wird mit einem Vakuumdichtband 22 (AT 200 Y, gelb, Fa. Aero Consultants, 8606 Nänikon, Schweiz) abgedichtet.

Im Bereich des Ein- und Auslaufes wird je ein Spiralband 9mm 23, Fa. Otto Fischer AG, 2008 Zürich eingelegt und je in der Mitte mit einem Normaplast T-Schlauchverbinder TS10, Fa. Tecalto AG, 8048 Zürich verbunden.

An den beiden Schlauchverbindern werden PE-Schläuche, naturfarbig, 12x10mm, Fa. Maagtechnik AG, 8600 Dübendorf mit genügender Länge angebracht. Vor dem eigentlichen Infusionsprozess wird während 1 Stunde evakuiert, indem der Schlauch auf der Eingangsseite 24 zugeklemmt, und an der Ausgangsseite 25 Vakuum angelegt wird.

Nach Kontrolle auf Dichtheit wird über den geöffneten Schlauch auf der Eingangsseite 8 das Harz aus einem Vorratsgefäß angesaugt, welches 3 kg der Harzmischung enthält. Das Harz sollte sich nun innerhalb weniger Minuten gleichmäßig und möglichst geradlinig vom Einlauf zum Auslauf bewegen. Es dürfen sich keine Luftblasen bilden und der Einlauf ist abzuklemmen, bevor Luft über den Einlauf 8 angesaugt wird.

Nun ist an dem im Kessel noch verbleibenden Harz in regelmäßigen Abständen zu kontrollieren, ob die Gelierung durch sich bemerkbarmachende Verdickung beginnt. Ab diesem Zeitpunkt wird der ganze Aufbau für eine weitere Stunde unter Vakuum gehalten.

Danach wird die VAP Folie entfernt und die Release Ply F Folie auf beiden Seiten der Probenkörper langsam abgerissen, wobei darauf zu achten ist, dass möglichst wenig Harz auf der Abreißfolie haften bleibt.

Das Harz auf den Probekörpern wird über Nacht vollständig ausgehärtet. Nach dem Aushärten werden die einzelnen Probekörper auf einer Säge auf eine Kantenlänge von 185 bis 190 mm besäumt, um Randeinflüsse zu eliminieren.

In analoger Weise wie vor dem Versuch, ist die Rohdichte Rd2 in $kg/m^3$ durch genaue Wägung und Abmessen mittels Messschieber zu bestimmen. Außerdem ist die Dicke des Probekörpers nach der Harzaufnahme zu bestimmen.

Die Berechnung der pro m² Probenseite aufgenommenen Harzmenge berechnet sich nun wie folgt:

$$\text{Harzaufnahme } [g/m^2] = 0{,}5 \times (Rd2 - Rd1) \ [kg/m^3] \times \text{Dicke nach Harzaufnahme } [mm]$$

Der Faktor 0,5 spiegelt den Bezug ausschließlich auf die erste Flächenseite wieder und ist insofern notwendig, da Harz nicht nur in die erste, sondern auch in die zweite Flächenseite eindringt. Der Einfluss der zweiten Flächenseite wird durch den Faktor 0,5 eliminiert.

Von den drei Bestimmungen pro Strukturelement ist der Mittelwert zu bilden.

In Weiterbildung der Erfindung ist vorgesehen, dass die Harzaufnahme der vorerwähnten zweiten, zur ersten Flächenseite parallelen Flächenseite ebenfalls die zuvor erläuterten Harzaufnahmewerte aufweist.

In Weiterbildung der Erfindung ist mit Vorteil vorgesehen, dass die spezifische Schälenergie beim Abschälen der Deckschicht von der Kernschicht eines Prüfkörpers aus einem Sandwich-Verbundelement mindestens 100 $J/m^2$, vorzugsweise mehr als 200 $J/m^2$ beträgt. Die spezifische Schälenergie wird vorzugsweise wie folgt bestimmt:

Eine 20 mm dicke Schaumstoff-Kernschicht (Strukturelement) wird beidseitig mit einem glasfaserverstärkten Harz zu einer Sandwichverbundplatte laminiert. Standardaufbau der Glasfaserlagen:

- 300 g/m$^2$ CSM
- 600 g/m$^2$ GF-Gewebe
- 450 g/m$^2$ CSM
- Kern
- 450 g/m$^2$ CSM
- 600 g/m$^2$ GF-Gewebe
- 300 g/m$^2$ CSM

Als Harz wird das in der Endanwendung verwendete Harz eingesetzt. Standardmäßig kann ein auf 40 min Topfzeit eingestelltes Polyesterharz, bevorzugt Crystic 196 MV, Fa. Walter Mäder AG, 8956 Killwangen, Schweiz, eingesetzt werden.

Aus der Sandwichverbundplatte werden Proben gemäß Fig. 11 zugesägt. Je 3 Proben, bei denen die obere Deckschichtlage und 3 Proben, bei denen die untere Deckschichtlage abgeschält wird. Um die Deckschichtlage abschälen zu können, wird ein 25 mm langes Teil der zu messenden Deckschicht mit zwei Sägeschnitten senkrecht und parallel zur Deckschicht freigelegt und mit einer Bohrung versehen.

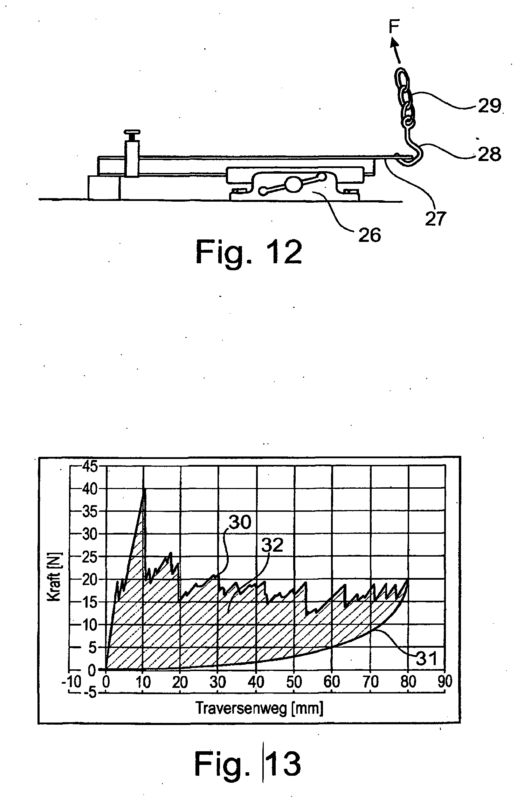

Die untere Hälfte der Probe wird gemäß Fig. 12 in einer Klemmvorrichtung 26 auf einer Zugprüfmaschine fixiert. Der überstehende, gelochte Teil der zu messenden Deckschicht 27 wird mittels Haken 28 und Kette 29 an der Kraftmessdose befestigt

Mit einer Prüfgeschwindigkeit von 100 mm/min wird ein Riss in der Grenzschicht zwischen Schaumstoff und oberer Deckschicht erzeugt und auf ca. 100 mm Länge fortgepflanzt. Anschließend wird die Traverse zurückgefahren in die Startposition. Dabei wird die Kraft in Abhängigkeit vom Traversenweg aufgezeichnet, und man erhält eine Messkurve analog Fig. 13.

Aus der von der Belastungs- 30 und Entlastungskurve 31 eingeschlossenen Fläche 32 wird die Schälenergie bestimmt. Diese wir durch die erzeugte Rissfläche (Probenbreite x Risslänge) dividiert, um die gewünschte spezifische Schälenergie zu erhalten. Zur Bestimmung der Risslänge wird das Rissende unter dem Mikroskop markiert. Aus den Resultaten der insgesamt 6 Proben wird der Mittelwert gebildet.

Ganz besonders bevorzugt ist eine Ausführungsform des Strukturelementes, bei der dieses, wie bereits eingangs erwähnt, neben der ersten durch Heißelementschneiden hergestellten Flächenseite eine parallel hierzu angeordnete zweite Flächenseite aufweist, die analog zur ersten Flächenseite hergestellt ist. Bevorzugt liegen die Werte für die Harzaufnahme und/oder den Glanzwert und/oder die Schälfestigkeit in den weiterbildungsgemäß im Zusammenhang mit der ersten Flächenseite angegebenen Bereichen.

Bevorzugt beträgt die Dickentoleranz des Strukturelementes, d.h. beträgt die maximale Dickentoleranz, gemessen zwischen der ersten und der zweiten Flächenseite einer planparallelen Platte mit 2 bis 3 m$^2$ Grundfläche, weniger als 1,0 mm, vorzugsweise weniger als 0,5 mm.

Im Hinblick auf den strukturellen Aufbau des Strukturelementes gibt es unterschiedliche Möglichkeiten. Gemäß einer ersten bevorzugten Ausführungsform weist das Strukturelement in einer Draufsicht auf die erste oder zweite Flächenseite ausschließlich parallele flächige Schweißnähte auf, deren Flächenerstreckung sich vorzugsweise senkrecht zur Flächenerstreckung der ersten Flächenseite erstreckt. Die parallelen Schweißnähte wirken dann versteifend in Bezug auf eine Druckbelastung der ersten Flächenseite. Ein derartiges Strukturelement unterscheidet sich von dem in der EP 1 536 944 B2 offenbarten Strukturelement nicht nur hinsichtlich der Oberflächenbeschaffenheit der ersten Flächenseite, sondern auch im Hinblick auf die Anordnung der Schweißnähte. Gemäß einer alternativen bevorzugten Ausführungsform sind die Schweißnähte ausgebildet und angeordnet wie in der EP 1 536 944 B2 beschrieben und beansprucht, d.h. es ist (in einer Draufsicht auf die erste Flächenseite) ein Netzwerk aus sich kreuzenden Schweißnähten gebildet, die eine versteifend wirkende Stegstruktur bilden. Gemeint ist jeweils die Anordnung der Schweißnähte in einer Draufsicht auf die erste Flächenseite.

Besonders zweckmäßig für den Einsatz des Strukturelementes als tragendes Bauteil ist es, wenn der geschäumte Kunststoff eine überwiegend geschlossenzellige Struktur aufweist, wobei vorzugsweise die geschlossenen Zellen in einem Volumenprozentverhältnis bezogen auf das Strukturelementvolumen aus einem Wertebereich zwischen 92 und 98 Vol% vorgesehen sind. Die Prozentzahl wird bestimmt, in dem von 100 % der Anteil offener Zellen subtrahiert wird. Dieser Wert wird mittels Wasserabsorption im Vakuum gemäß ASTM D 1056 - 07 bestimmt bzw. definiert, wobei der aus der in der Norm beschriebenen Methode resultierende Gewichtsprozentwert zuvor umgerechnet werden muss in den Volumenprozentwert, indem der Gewichtsprozentwert multipliziert wird mit der Dichte des Strukturelementes und dividiert werden muss durch die Dichte von Wasser.

Um eine hohe Drucksteifigkeit des Strukturelementes senkrecht zu dessen Flächenerstreckung bzw. senkrecht zur ersten Flächenseite zu erreichen, ist in Weiterbildung der Erfindung mit Vorteil vorgesehen, dass die erste Flächenseite senkrecht zur Extrusionsrichtung der Körpersegmente angeordnet ist, d.h. senkrecht zur Vollstreckung der Polymerstruktur, welche in Extrusionsrichtung orientiert ist. Bevorzugt ist die erste Flächenseite zusätzlich oder alternativ senkrecht zur Flächenerstreckung von zwischen den Körpersegmenten vorgesehenen Schweißnähten angeordnet, so dass sich in der Draufsicht auf die erste Flächenseite eine Schweißlinienstruktur ergibt.

Die Erfindung betrifft auch ein Verfahren zum Herstellen eines zuvor beschriebenen, nach dem Konzept der Erfindung ausgebildeten Strukturelementes, wobei gemäß dem Verfahren zunächst durch Extrusionsschäumen, vorzugsweise platten- oder stabförmige Körpersegmente aus einem thermoplastischen Kunststoff, insbesondere PET, hergestellt werden. Diese werden dann längsseitig flächig, insbesondere lückenlos, d.h. freiraumfrei, zu einem Schaumstoffblock zusammengeschweißt, wobei sich die Extrusionsrichtung vorzugsweise in Richtung der Längserstreckung der Körpersegmente erstreckt. Daraufhin wird der Schaumstoffblock in einzelne Strukturelemente, vorzugsweise quer zur Flächenerstreckung der zwischen den Körpersegmenten gebildeten flächigen Schweißnähte aufgeteilt, wobei hierdurch die erste Flächenseite und vorzugsweise auch eine dazu zweite parallele Flächenseite an den Strukturelementen mit einer offene Poren aufweisenden Oberfläche geschaffen wird. Bevorzugt besteht das aus dem Verfahren hergestellte Strukturelement ausschließlich aus Kunststoff, d.h. es ist insbesondere kleberfrei.

Erfindungsgemäß erfolgt das Aufteilen des Schaumstoffblocks in die Strukturelemente nicht mittels einer Säge, sondern durch Heißelementschweißen, insbesondere Heißdrahtschweißen, und zwar derart, dass die Oberfläche der ersten Flächenseite und vorzugsweise auch der zweiten Oberflächenseite (unter Beibehaltung von Poren) teilweise versiegelt wird.

Als kritisch für die Verfahrensführung hat sich die Temperatur des Heißelementes, insbesondere des Heißdrahtes, insbesondere in Kombination mit der Relativgeschwindigkeit des Heißelementes zum Schaumstoffblock erwiesen. Gute Ergebnisse im Hinblick auf die gewünschte Oberflächenbeschaffenheit wurden erreicht mit einer Temperatur des Heißelementes aus einem Wertebereich zwischen 300°C und 700°C, insbesondere zwischen 400°C und 700°C, vorzugsweise zwischen 500°C und 700°C, wobei diese Temperatur zumindest zu Beginn eines Schneid- bzw. Abtrennvorgangs vorgesehen sein sollte. Vorzugsweise wird die Temperatur zumindest näherungsweise auch während des Schneid- bzw. Abrennvorgangs gehalten.

Wesentlich ist es zudem, dass in Kombination mit der oben gezeigten Temperatur, zum Abtrennen eine Relativgeschwindigkeit zwischen Heißelement und Schaumstoffblock durch Bewegen des Heißelementes und/oder des Schaumstoffblockes aus einem Wertebereich zwischen 50 mm/min und 150 mm/min.

Vorgenannte Temperatur und Vorschubgeschwindigkeitswerte gelten insbesondere für ein Schaumstoffblockmaterial mit einer Dichte (inklusive Lufteinschlüsse) aus einem Bereich zwischen 50 kg/m$^3$ und 250 kg/m$^3$, bevorzugt zwischen 60 kg/m$^3$ und 150 kg/m$^3$.

Es wurde gefunden, dass die optimale Vorschubgeschwindigkeit zur Erzielung der gewünschten Glanzwerte abhängig ist von der Dichte des zu bearbeitenden Schaumstoffblocks. Für einen Schaumstoffblock mit einer Dichte von 60 kg/m$^3$ wird die Vorschubgeschwindigkeit des Heißelements bevorzugt aus einem Wertebereich zwischen 100 mm/min und 140 mm/min gewählt. Für einen Schaumstoffblock mit einer Dichte von 100 kg/m$^3$ wird die Vorschubgeschwindigkeit bevorzugt aus einem Wertebereich zwischen 65 mm/min und 85 mm/min gewählt. Für einen Schaumstoffblock mit einer Dichte von 130 kg/m$^3$ wird die Vorschubgeschwindigkeit bevorzugt aus einem Wertebereich zwischen 50 mm/min und 70 mm/min gewählt.

Dies hängt wiederum damit zusammen, dass die benötigte Versiegelungsenergie pro mittels des Heißelements teilzuversiegelnder Fläche abhängig ist von der Dichte des Schaumstoffblocks.

Dabei wurde gefunden, dass folgender funktionaler Zusammenhang für die Berechnung der Energie gilt:

$$E = ½ \times (U \times I) / (v \times L)$$

E steht dabei für die einzubringende Energie pro teilzuversiegelnder Fläche. Die eingesetzte elektrische Energie berechnet sich aus dem Produkt der an das Heißelement angelegten elektrischen Spannung U und der Stromstärke I des durch das Heißelement fließenden Stroms. Dieses Produkt wird geteilt durch das Produkt aus der Vorschubgeschwindigkeit v des Heißelementes, insbesondere des Heißdrahtes und der Länge L des Heißelementes, gemessen senkrecht zur Vorschubrichtung. Die Einheit der Energie lautet Wh/m$^2$, wobei W für Watt, h für Stunden und m$^2$ für Quadratmeter steht. Der Faktor ½ berücksichtigt, dass gleichzeitig pro Heißelement zwei teilversiegelte Flächen erzeugt werden.

Bevorzugt entspricht dabei die Breite des Schaumstoffblocks, gemessen parallel zu Längenerstreckung des Heißelementes zumindest 60 %, bevorzugt zwischen 70 % und 95 % der Länge des Heißelementes.

Optimale Glanzwerte der resultierenden Oberfläche der entsprechenden Flächenseite werden erzielt, wenn eine Energie pro teilzuversiegelnder Fläche über das Heißelement, insbesondere den Heißdraht eingebracht wird, die sich nach dem folgenden funktionalen, linearen Zusammenhang, berechnet:

$$E\ [Wh/m^2] = m\ [Whm/kg] \times \text{Dichte Schaumstoffblock}\ [kg/m^3] + b\ [Wh/m^2]$$

Dabei wird m vorzugsweise aus einem Wertebereich zwischen +0,12 und +0,20 Whm/kg gewählt, noch weiter bevorzugt aus einem Wertebereich zwischen +0,12 und +0,18 Whm/kg. Gleichzeitig wird b bevorzugt aus einem Wertebereich zwischen -0,5 und +0,5 Wh/m$^2$, ganz besonders bevorzugt zwischen -0,5 und 0.0 Wh/m$^2$ gewählt.

Für eine Dichte von 60 kg/m$^3$ ergeben sich somit die folgenden, bevorzugten Grenzen für die vorzugsweise eingebrachte Energie (Versiegelungsenergie) pro Fläche: 6,7Wh/m$^2$ bis 12,5Wh/m$^2$, insbesondere 6,7 Wh/m$^2$ bis 10,8 Wh/m$^2$. Für eine Dichte des Schaumstoffblocks von 100 kg/m$^3$ ergeben sich bevorzugte Energiebereiche zwischen 11,5 Wh/m$^2$ und 20,5 Wh/m$^2$, bevorzugt zwischen 11,5 Wh/m$^2$ und 18,0 Wh/m$^2$. Für ein Schaumstoffmaterial mit einer Dichte von 130 kg/m$^3$ ergeben sich folgende bevorzugte Grenzen für die eingebrachte Energie zwischen 15,1 Wh/m$^2$ und 26.5 Wh/m$^2$, vorzugsweise zwischen 15,1 Wh/m$^2$ und 23,4 Wh/m$^2$.

Anhand der folgenden Tabelle wird ersichtlich, dass bei Nichteinhaltung der bevorzugten Schneidgeschwindigkeits- und Schneidtemperaturvorgabe (siehe rechte Spalte) eine Oberfläche resultiert, deren Glanzwerte außerhalb des beanspruchten Bereichs liegen. Die Schälfestigkeit bei schlechten Einstellungen war nicht messbar, da die Haftung minimal bis nicht vorhanden war.

| | | Referenz gesägt | gute Einstellung | schlechte Einstellung |
|---|---|---|---|---|
| Dichte Schaumstoff | kg/m$^3$ | 105 | 105 | 105 |
| Drahtdicke | mm | | 0.4 | 0.4 |
| Draht-Vorschub | mm/min | | 84 | 96 |
| Drahtspannung | V | | 54 | 48 |
| Stromaufnahme | A | | 3.45 | 3 |
| Drahtlänge | m | | 1.49 | 1.49 |
| Anzahl teilversiegelter Flächen | | | 2 | 2 |
| spezifische Energie pro teilversiegelter Fläche | Wh/m$^2$ | | 12.40 | 8.39 |
| | | | | |
| Glanzwert 60° | | 1.7 | 4.3 | 28.6 |
| Harzaufnahme | g/m2 | 1070 | 320 | 130 |
| Schälfestigkeit | J/m2 | 748 | 641 | nicht messbar |
| Dickentoleranz | mm | 0.4 | 0.4 | 5.9 |

Bevorzugt wird der Schaumstoffblock mit mehreren parallelen Heißelementen, insbesondere Heißdrähten gleichzeitig in eine Vielzahl von Strukturelementen geschnitten. Bevorzugt kommen dabei mehr als 30, noch weiter bevorzugt mehr als 40, insbesondere zwischen 40 und 100 Heißelemente, insbesondere Heißdrähte zum Einsatz.

Besonders zweckmäßig ist es, wenn das Zusammenschweißen der Körpersegmente durch flächiges Anschmelzen, beispielsweise mittels eines Heizschwertes, der zu verbindenden Seitenflächen der Körpersegmente und nachfolgendes Zusammenfügen derselben erfolgt, wobei die Schmelzzonen unter Ausbildung der flächigen Schweißnähte in Form von porenarmen oder porenfreien Kunststoffzwischenschichten aushärten, was vorzugsweise ohne weitere Zusätze wie Klebeharze erfolgt, so dass das Strukturelement als solches ausschließlich aus Kunststoff und zwar aus dem thermoplastischen Kunststoff, insbesondere PET, besteht.

Erfindungsgemäß wird die Temperatur des oder der Heißelemente so eingestellt und gleichzeitig die Relativgeschwindigkeit zwischen Heißelement bzw. Elementen und Schaumstoffblock so gewählt, dass der vorerwähnte Glanzwert aus einem Wertebereich zwischen 2 und 10 erreicht wird.

Als ganz besonders bevorzugt hat sich herausgestellt, wenn der Durchmesser des, vorzugsweise zylindrischen Heißdrahtes aus einem Durchmesserwertebereich zwischen 0,25 mm und 2,0 mm, insbesondere zwischen 0,25 mm und 1,00 mm, vorzugsweise zwischen 0.40 mm und 0.80 mm gewählt ist.

Die Erfindung führt auch auf ein Sandwich-Verbundelement, insbesondere zur Herstellung von Windflügeln für Windkraftanlagen und/oder zum Einsatz im Bereich Marine (insbesondere zur Herstellung von Bootsrümpfen, Bootsdecks) im Bereich Schienenverkehr (insbesondere zur Herstellung von Zugfronten, Dächer, Böden, Wandelemente von Eisenbahnwaggons), im Massentransport auf der Straße (insbesondere zur Herstellung von Busdächern, - böden, -fronten), für strukturelle Anwendungen im Baubereich (z.B. Dächer) u. a. m., wobei das Sandwich-Verbundelement neben dem erfindungsgemäßen Strukturelement mindestens eine mit dem Strukturelement verbundene Deckschicht umfasst, insbesondere zwei das Strukturelement zwischen sich aufnehmende Deckschichten, wobei es bevorzugt ist, dass die mindestens eine Deckschicht aus glasfaserverstärktem Kunststoff ausgebildet ist.

Bevorzugt geeignet ist die Erfindung zur Herstellung von SandwichVerbundelementen im Harz-Infusionsverfahren. Dabei wird der FaserVerbund (Gelege bzw. Gewebe) inkl. Kernmaterial im trockenen Zustand aufgebaut. Anschließend wird er mittels vakuumdichter Folie abgedeckt und am Rand abgedichtet. Ein an der Folie angelegtes Vakuum zieht schließlich das flüssige Harz aus einem Vorratsbehälter durch den Aufbau und tränkt somit den Verbund. Das Aushärten bzw. die Harzreaktion findet typischerweise bei Raumtemperatur statt, kann aber auch bei erhöhter Temperatur erfolgen.

Die Erfindung betrifft also insbesondere auch ein Sandwich-Verbundelement, welches im Harzinfusionsverfahren hergestellt wurde, wobei wesentlich ist, dass das Harz, konkret das Laminierharz mittels Vakuum in den Schichtaufbau eingesaugt wird, wobei es besonders bevorzugt ist, wenn das die Deckschichten mit dem Strukturelement verbindende Harz gleichzeitig das Harz der Deckschichten ist, mit welchem das Gelege bzw. Gewebe der Deckschichten getränkt ist.

Ganz besonders bevorzugt ist es, wenn die Körpersegmente einen Formquerschnitt aufweisen, welcher ein lückenloses Aneinanderfügen der Körpersegmente ermöglicht, wobei die Körpersegmente vorzugsweise lückenlos durch Verschweißen aneinandergefügt sind.

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in:

Fig. 1:     eine Draufsicht auf eine erste Flächenseite eines Strukturelementes,

Fig. 2:     eine Schnittansicht durch ein Strukturelement senkrecht zur Flächenerstreckung der ersten Flächenseite, nachdem dieses zur Bestimmung der Harzaufnahme entsprechend dem im allgemeinen Beschreibungsteil beschriebenen Verfahren mit Klebeharz beaufschlagt wurde,

Fig. 3:     eine Schnittansicht durch ein Strukturelement gemäß dem Stand der Technik mittels einer durch Sägen hergestellten Flächenseite, welches mit Harz zur Bestimmung der Harzaufnahme beaufschlagt wurde,

Fig. 4:     zwei Körpersegmente, die längs ihrer Längsseitenfläche miteinander verschweißt werden,

Fig. 5:     ein Schaumstoffblock aus mehreren miteinander verschweißten Körpersegmenten, wobei der Schaumstoffblock mittels eines Heißdrahtes senkrecht zur Flächenerstreckung der Schweißnähte in Strukturelemente aufgeteilt wird,

Fig. 6:     ein alternativer Schaumstoffblock, hergestellt aus zwei oder alternativ mehreren Schaumstoffblöcken gemäß Fig. 5, die so miteinander verschweißt sind, dass sich kreuzende Schweißnähte resultieren, wobei der Schaumstoffblock mit Hilfe von Heißdrähten in Strukturelemente aufgeteilt wird,

Fig. 7:     ein aus einem Schaumstoffblock gemäß Fig. 5 resultierendes Strukturelement,

Fig. 8:     ein aus dem Schaumstoffblock gemäß Fig. 6 resultierendes Strukturelement,

Fig. 9:     Lagen-Aufbau zur Messung der Harzaufnahme

Fig. 10:    Anordnung der Probekörper zur Messung der Harzaufnahme

Fig. 11:    aus einer Sandwich-Verbundplatte herausgesägte Probe zur Messung der spezifischen Schälenergie,

Fig. 12:    Versuchsaufbau zur Bestimmung der Schälenergie, wobei die Probe gemäß Fig. 9 in einer Klemmvorrichtung auf einer ZugPrüfmaschine fixiert ist, und

Fig. 13:    eine mittels einer Zug-Prüfmaschine zur Feststellung der Schälenergie aufgenommene Messkurve, bei der die Zugkraft in Abhängigkeit vom traversen Weg aufgezeichnet ist.

In den Figuren sind gleiche Elemente und Elemente mit der gleichen Funktion mit den gleichen Bezugszeichen gekennzeichnet.

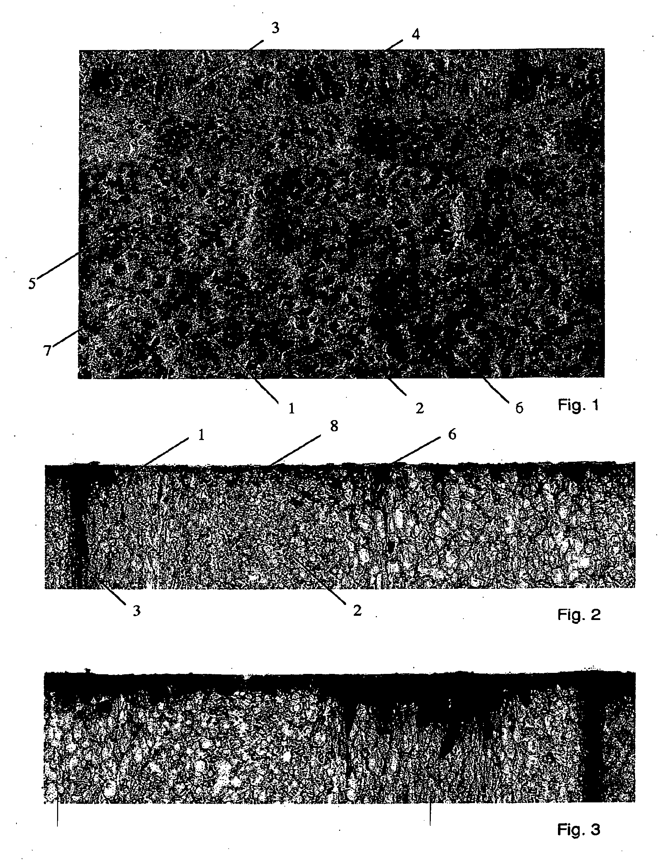

In Fig. 1 ist in einer Draufsicht eine erste Flächenseite 1, genauer die Oberfläche einer ersten Flächenseite 1 eines Strukturelementes 2 aus geschäumtem PET gezeigt. Zu erkennen ist eine Schweißnaht 3, deren Flächenerstreckung senkrecht zur Flächenerstreckung der ersten Flächenseite 1 verläuft und die zwei Körpersegmente 4, 5, die durch Extrusionsschäumen von PET erhalten wurden, flächig miteinander verbindet. Zu erkennen ist, dass die Körpersegmente 4, 5 selbst eine Art wabenförmige Struktur aufweisen, die daher resultiert, dass das PET am Ende des Extruders durch eine Lochdüse gepresst wird und die einzelnen Stränge vor dem Aushärten selbsttätig vollflächig, d.h. lückenlos miteinander verschweißen.

Die Oberfläche der ersten Flächenseite 1 des Strukturelementes 2 hat einen Glanzwert von 4,3.

Zu erkennen sind eine Vielzahl von offenen Poren 6, die durch Abtrennen des Strukturelementes 2 aus einem Schaumstoffblock mittels eines Heißdrahtes erzeugt wurden. In Bereichen 7 zwischen den Poren 6 ist die Oberfläche der ersten Flächenseite 1 thermisch versiegelt.

In Fig. 2 ist eine Schnittansicht senkrecht zur Flächenerstreckung der ersten Flächenseite 1 durch ein Strukturelement 2 gezeigt. Parallel zur ersten Flächenseite 1 verläuft eine zweite Flächenseite, die in der Darstellung gemäß Fig. 2 jedoch abgeschnitten ist. Zu erkennen ist auch hier eine Schweißnaht 3, die an einem porenarmen (verdichteten) Bereich zu erkennen ist.

Die erste Flächenseite 1 ist (zur Bestimmung der Harzaufnahmen) mit Klebeharz 8 beaufschlagt, gemäß dem im allgemeinen Beschreibungsteil erläuterten Verfahren. Zu erkennen ist eine gewisse Eindringtiefe des Klebeharzes 8, ein Polyesterharz, in die Porenstruktur, durch die offenen Poren 6 hindurch. Die Harzaufnahme beträgt 150 g/m$^2$. Im Vergleich zu Fig. 3, in der eine entsprechende Schnittansicht durch ein Strukturelement gemäß dem Stand der Technik mit durch Sägen hergestellter erster Flächenseite gezeigt ist, ist die Eindringtiefe des Harzes bei dem Ausführungsbeispiel gemäß Fig. 2 geringer, und insbesondere kann das Klebeharz 8 bei dem Ausführungsbeispiel gemäß Fig. 2 durch wesentlich weniger vorhandene offene Poren in die erste Flächenseite 1 eindringen als bei dem Ausführungsbeispiel gemäß dem Stand der Technik in Fig. 3, was insgesamt zu einer deutlich geringeren Harzaufnahme des Ausführungsbeispiels gemäß Fig. 2 führt mit dem Ergebnis eines geringeren Gesamtgewichtes eines mit dem Strukturelement 2 gemäß Fig. 2 hergestellten Sandwich-Elementes.

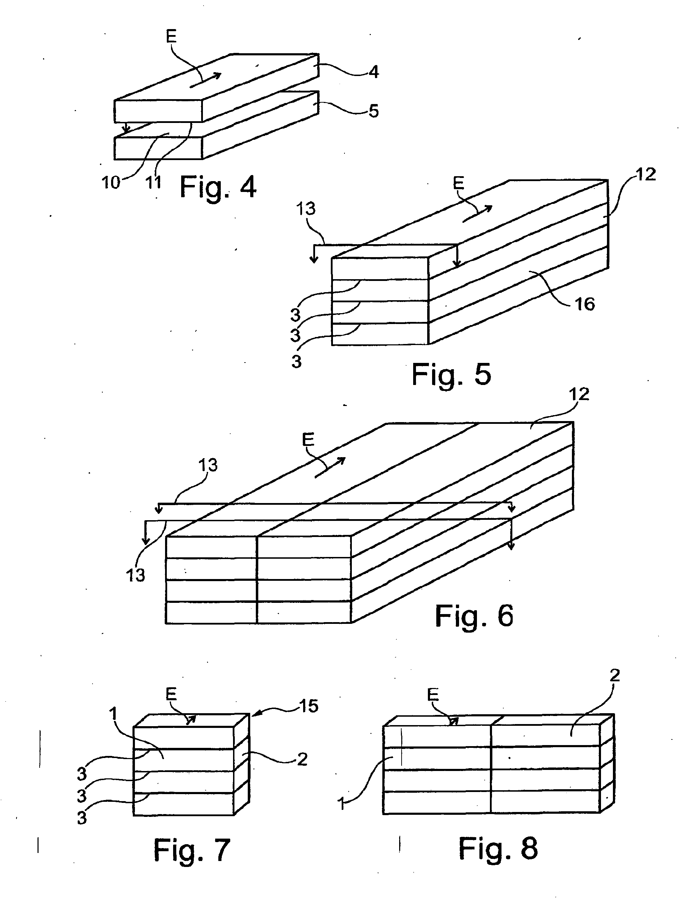

In Fig. 4 ist ein Verfahrensschritt bei der Herstellung eines Strukturelementes gezeigt. Zu erkennen sind zwei in eine Extrusionsrichtung E extrudierte plattenförmige Körpersegmente 4, 5, die in etwa beispielhaft eine Dickenerstreckung von 5cm, eine Breitenerstreckung von etwa 1 m und eine Längenerstreckung von etwa 2m aufweisen. Die Körpersegmente 4, 5 werden in der Pfeilrichtung zusammengefügt, nachdem die einander gegenüberliegenden Seitenflächen 10, 11 angeschmolzen wurden. Dieser Vorgang wird mit mehreren Körpersegmenten durchgeführt, so dass ein beispielhaft in Fig. 5 gezeigter Schaumstoffblock 12 resultiert. Der Schaumstoffblock 12 gemäß Fig. 5 besteht aus insgesamt vier Körpersegmenten und weist drei parallele Schweißnähte 3 auf. Mit einem lediglich exemplarisch als Heißdraht dargestellten Heißelement 13 wird der Schaumstoffblock 12 in plattenförmige Strukturelemente 2 unterteilt, wie sie in Fig. 7 und 8 gezeigt sind.

Bevorzugt ist dabei die Auftrenn- bzw. Schnittrichtung senkrecht zur Extrusionsrichtung E senkrecht zur Flächenerstreckung der Schweißnähte 3. Die Temperatur des Heißelementes 13 beträgt in dem gezeigten Ausführungsbeispiel 640°C und die Geschwindigkeit, mit der das Heißelement 13 durch den Schaumstoffblock 12 bewegt wird beträgt 84 mm/min, so dass eine Flächenseite 1 mit der gewünschten Oberfläche, aufweisend offene Poren und teilweise thermisch versiegelte Bereiche resultiert. Auf der ersten Flächenseite 1 abgewandten Seite weist das Strukturelement eine zu ersten Flächenseite 1 parallele zweite Flächenseite 15 auf, die ebenfalls durch Heißelementschneiden hergestellt wurden. Bevorzugt wird der Schaumstoffblock 12 gleichzeitig mit einer Vielzahl von parallelen Heißelementen 13 in mehrere Strukturelemente aufgetrennt.

In Fig. 6 sind zwei Schaumstoffblöcke 12 gemäß Fig. 5 zu einem gemeinsamen Schaumstoffblock 12 durch Verschweißen zusammengefügt, und zwar durch Verschweißen der senkrecht zu den Seitenflächen und senkrecht zu den Flächenseite orientierten Hochseiten 16 des quaderförmigen Strukturelementes, so dass der Schaumstoffblock in Draufsicht auf die erste Flächenseite sich kreuzende Schweißnähte aufweist, wobei mehrere parallele Schweißnähte vorgesehen sind, die von zumindest einer senkrecht dazu orientierten Schweißnaht geschnitten sind. In der Praxis kann es vorkommen, dass die parallelen Schweißnähte der miteinander verschweißten Schaumstoffblöcke nicht ideal miteinander fluchten, sondern treppenartig versetzt zueinander angeordnet sind. Dieser Versatz ist zur Erhöhung der Stabilität auch erwünscht. Wird nun ein Schaumstoffblock 12 gemäß Fig. 6 analog zu dem Schaumstoffblock 12 gemäß Fig. 5 mit Hilfe von Heißelementen 13 in Strukturelemente 2 unterteilt, resultieren Strukturelemente 2 wie in Fig. 8 gezeigt, wobei auf der ersten Flächenseite 1 sich kreuzende Schweißnähte zu erkennen sind, deren Flächenerstreckung in Extrusionsrichtung E verläuft, d.h. senkrecht zur Flächenerstreckung der ersten Flächenseite 1 und der dazu parallelen zweiten Flächenseite 15.

Ein Sandwich-Verbundelement kann hergestellt werden, indem auf die erste und die Flächenseite 1, 15 eines beispielhaft in Fig. 7 oder 8 gezeigten Strukturelementes 2 eine Deckschicht, insbesondere aus glasfaserverstärktem Kunststoff, vorzugsweise mittels eines Harzes festgeklebt wird.

**Bezugzeichen**

| | |
|---|---|
| 1 | erste Flächenseite |
| 2 | Strukturelement |
| 3 | Schweißnähte |
| 4 | Körpersegment |
| 5 | Körpersegment |
| 6 | Poren |
| 7 | thermisch versiegelter Bereich |
| 8 | Klebeharz |
| 10 | Seitenfläche |
| 11 | Seitenfläche |
| 12 | Schaumstoffblock |
| 13 | Heißelement |
| 15 | zweite Flächenseite |
| 16 | Hochseiten |
| 17 | Glasplatte |
| 18 | Endlosmatte aus Glasfasern |
| 19 | Polyester-Abreißgewebe blau |
| 20 | Probenkörperlage |
| 21 | VAP Folie |
| 22 | Vakuumdichtband |
| 23 | Spiralband 9mm |
| 24 | Eingangsseite |
| 25 | Ausgangsseite |
| 26 | Klemmvorrichtung |
| 27 | überstehender, gelochter Teil der zu messenden Deckschicht |
| 28 | Haken |
| 29 | Kette |
| 30 | Belastungskurve |
| 31 | Entlastungskurve |
| 32 | eingeschlossene Fläche |

E   Extrusionsrichtung

**Patentansprüche**

1.  Strukturelement zur Verwendung als Kernschicht in einem Sandwich-Verbundelement, wobei das Strukturelement (2) aus mehreren miteinander verschweißten Körpersegmenten (4, 5) aus einem extrusionsgeschäumten thermoplastischen Kunststoff, insbesondere PET, gebildet ist und wobei das Strukturelement (2) eine erste Flächenseite (1) zur Verklebung mit einer Deckschicht aufweist, wobei eine mit einem Harz (8) beaufschlagbare Oberfläche der ersten Flächenseite (1) offene Poren (6) aufweist, wobei die Oberfläche der ersten Flächenseite (1) durch Heißelementschneiden, insbesondere Heißdrahtschneiden, erzeugt ist, derart, dass die Oberfläche teilweise thermisch versiegelt ist,
    **dadurch gekennzeichnet,**
    **dass** ein Glanzwert der durch das Heißelementschneiden erhaltenen Oberfläche der ersten Flächenseite (1), gemessen bei 60° nach DIN 67530-1982 zwischen 2 und 10 Glanzeinheiten beträgt.

2.  Strukturelement nach Anspruch 1,
    **dadurch gekennzeichnet,**
    **dass** die Harzaufnahme auf der ersten Flächenseite (1) zwischen 150 g/m$^2$ und 500 g/m$^2$ beträgt.

**3.** Strukturelement nach einem der Ansprüche 1 oder 2,
**dadurch gekennzeichnet,**
**dass** der Glanzwert der Oberfläche der ersten Flächenseite (1), gemessen bei 60° nach DIN 67530-1982 zwischen 2 und 8, vorzugsweise zwischen 3 und 6 Glanzeinheiten beträgt.

**4.** Strukturelement nach einem der vorhergehenden Ansprüche,
**dadurch gekennzeichnet,**
**dass** die spezifische Schälenergie zum Abschälen einer auf der ersten Flächenseite (1) festgelegten Deckschicht mindestens 100 J/m$^2$, vorzugsweise mindestens 200 J/m$^2$ beträgt.

**5.** Strukturelement nach einem der vorhergehenden Ansprüche,
**dadurch gekennzeichnet,**
**dass** eine zur ersten Flächenseite (1) parallele zweite Flächenseite (15) vorgesehen ist, deren Oberfläche offene Poren (6) aufweist und mit einem Harz (8) beaufschlagbar ist, wobei die Oberfläche der zweiten Flächenseite (15) durch Heißelementschneiden, insbesondere Heißdrahtschneiden erzeugt ist, derart, dass diese Oberfläche teilweise thermisch versiegelt ist.

**6.** Strukturelement nach Anspruch 5,
**dadurch gekennzeichnet,**
**dass** die Dickentoleranz des Strukturelementes (2), gemessen bei einer planparallelen Platte zwischen der ersten und der zweiten Flächenseite (1, 15) weniger als 1mm, vorzugsweise weniger als 0,5 mm beträgt.

**7.** Strukturelement nach einem der vorhergehenden Ansprüche,
**dadurch gekennzeichnet,**
**dass** ausschließlich parallele Schweißnähte (3) oder parallele Schweißnähte (3) und die parallelen Schweißnähte (3), vorzugsweise rechtwinklig, kreuzende Schweißnähte (3) vorgesehen sind, die eine versteifend wirkende Stegstruktur bilden.

**8.** Strukturelement nach einem der vorhergehenden Ansprüche,
**dadurch gekennzeichnet,**
**dass** der geschäumte Kunststoff überwiegend geschlossenzellig ist.

**9.** Strukturelement nach einem der vorhergehenden Ansprüche,
**dadurch gekennzeichnet,**
**dass** sich die erste Flächenseite (1) senkrecht zu einer in Extrusionsrichtung (E) orientierten Verstreckung der Polymerstruktur und/oder senkrecht zur Flächenerstreckung von zwischen den Körpersegmenten (4,5) vorgesehenen Schweißnähten (3) erstreckt.

**10.** Verfahren zum Herstellen eines Strukturelementes nach einem der vorhergehenden Ansprüche mit den Schritten:

• Herstellen von, vorzugsweise platten- oder stabförmigen, Körpersegmenten (4,5) durch Extrusionsschäumen von thermoplastischem Kunststoff
• längsseitiges, flächiges Zusammenschweißen der Körpersegmente (4,5) zu einem Schaumstoffblock (12),
• Aufteilen des Schaumstoffblocks (12) in einzelne Strukturelemente (2), vorzugsweise quer zur Flächenerstreckung der zwischen den Körpersegementen (4,5) gebildeten flächigen Schweißnähte (3), und dabei Erzeugen jeweils einer ersten Flächenseite (1) an den Strukturelementen (2) mit einer offene Poren aufweisenden Oberfläche, wobei das Aufteilen des Schaumstoffblocks (12) in die Strukturelemente (2) durch Heißelementschneiden, insbesondere Heißdrahtschneiden durchgeführt,

wobei die Temperatur des Heißelementes, zumindest zu Beginn eines Schneidvorgangs, aus einem Wertebereich zwischen 300°C und 700°C eingestellt wird, und zwischen dem Heißelement (13) und dem Schaumstoffblock (12) während des Aufteilens eine Relativgeschwindigkeit aus einem Wertebereich zwischen 50 mm/min und 150 mm/min erzeugt wird und dadurch die Oberfläche der ersten Flächenseite (1) teilweise thermisch versiegelt wird, wobei die Temperatur des Heißelementes so eingestellt und ·gleichzeitig die Relativgeschwindigkeit zwischen ·Heißelement und Schaumstoffblock so gewählt wird, dass der Glanzwert aus einem Wertebereich zwischen 2 und 10 erreicht wird.

**11.** Verfahren nach Anspruch 10,
**dadurch gekennzeichnet,**

**dass** das Zusammenschweißen durch flächiges Anschmelzen der zu verbindenden Seitenflächen (10,11) der Körpersegmente (4,5) und nachfolgendes Zusammenfügen derselben und Aushärten der Schmelzzonen unter Ausbildung flächiger Schweißnähte (3) in Form von porenarmen oder porenfreien Kunststoffzwischenschichten durchgeführt wird.

**12.** Verfahren nach einem der Ansprüche 10 oder 11,
**dadurch gekennzeichnet,**
**dass** die Temperatur des Heizelementes, zumindest zu Beginn eines Schneidvorgangs, aus einem Wertebereich zwischen 300°C und 700°C, vorzugsweise zwischen 400°C und 700°C eingestellt wird.

**13.** Verfahren nach einem der Ansprüche 10 bis 12,
**dadurch gekennzeichnet,**
**dass** mittels des Heißelements eine Energie pro teilzuversiegelnder Fläche eingebracht wird, die sich nach folgendem linearen, funktionalen Zusammenhang berechnet:

$$E\ [Wh/m^2] = \quad m\ [Whm/kg] \times \text{Dichte des Schaumstoffblocks } [kg/m^3] + b\ [Wh/m^2],$$

wobei m aus einem Wertebereich zwischen 0,12 und 0,20, vorzugsweise zwischen 0,12 und 0,18 gewählt ist und b aus einem Wertebereich zwischen -0,5 und +0,5, insbesondere zwischen -0,5 und 0,0.

**14.** Verfahren nach einem der Ansprüche 10 bis 13,
**dadurch gekennzeichnet,**
**dass** als Heißelement (13) ein Heißdraht mit einem Durchmesser aus einem Durchmesserbereich zwischen 0,25 mm und 2,0 mm, insbesondere zwischen 0.25 mm und 1.00 mm, vorzugsweise zwischen 0.40 mm und 0.80 mm eingesetzt wird.

**15.** Sandwich-Verbundelement, insbesondere zur Verwendung zur Herstellung von Windflügeln für Windkraftanlagen und/oder für Anwendungen im Bereich Marine und/oder im Bereich Schienenverkehr und/oder im Massentransport auf der Straße und/oder für strukturelle Anwendungen im Baubereich, mit einem Strukturelement (2) nach einem der Ansprüche 1 bis 9 als Kernschicht, wobei auf der ersten Flächenseite (1) eine Deckschicht, insbesondere gebildet aus oder umfassend glasfaserverstärkten Kunststoff, mittels eines Klebeharzes (8) festgelegt ist.

**16.** Sandwich-Verbundelement nach Anspruch 15,
**dadurch gekennzeichnet,**
**dass** die erste Deckschicht, vorzugsweise auch eine zweite Deckschicht, im Infusionsverfahren festgelegt ist/sind.

**Claims**

**1.** A structural element for use as a core layer in a composite sandwich element, wherein
the structural element (2) is formed from a plurality of body segments (4, 5) of extrusions of foamed thermoplastic plastic, in particular PET, which segments are welded together, and wherein
the structural element (2) has a first face (1) that is to be bonded with a cover layer, wherein
a surface of the first face (1), onto which a resin (8) can be applied, has open pores (6), wherein
the surface of the first face (1) is generated by means of a hot element cutting process, in particular a hot wire cutting process, such that the surface is partially thermally sealed,
**characterized in that**,
a gloss value of the surface of the first face (1), obtained by the hot-element cutting, measured at 60° in accordance with DIN 67530-1982, is between 2 and 10 gloss units.

**2.** The structural element in accordance with claim 1,
**characterized in that**,
the resin absorption of the first face (1) is preferably between 150 g/m$^2$ and 500 g/m$^2$

**3.** The structural element in accordance with one of the claims 1 or 2,

**characterized in that**,
the gloss value of the surface of the first face (1), measured at 60° in accordance with DIN 67530-1982, is between 2 and 8 gloss units, preferably between 3 and 6 gloss units.

4. The structural element in accordance with one of the preceding claims,
**characterized in that**,
the specific energy required to peel off a cover layer affixed to the first face (1) is at least 100 J/m$^2$, preferably at least 200 J/m$^2$

5. The structural element in accordance with one of the preceding claims,
**characterized in that**,
a second face (15) is provided parallel to the first face (1); its surface, onto which a resin (8) can be applied, has open pores (6), wherein
the surface of the second face (15) is generated by means of a hot element cutting process, in particular a hot wire cutting process, such that this surface is partially thermally sealed.

6. The structural element in accordance with claim 5,
**characterized in that**,
the thickness tolerance of the structural element (2), measured on a plane parallel sheet between the first and the second face (I, 15) is less than 1 mm, preferably less than 0.5 mm.

7. The structural element in accordance with one of the preceding claims,
**characterized in that**,
parallel weld seams (3) are exclusively provided, or parallel weld seams (3) and weld seams (3) crossing the parallel weld seams (3), preferably at right-angles, are provided, which form a web structure acting in a stiffening manner.

8. The structural element in accordance with one of the preceding claims,
**characterized in that**,
the foamed plastic has predominantly closed cells.

9. The structural element in accordance with one of the preceding claims,
**characterized in that**,
the first face (1) extends at right-angles to an extension of the polymer structure oriented in the extrusion direction (E), and/or at right-angles to the surface extension of weld seams (3) provided between the body segments (4, 5).

10. A method for the manufacture of a structural element in accordance with one of the preceding claims, with the steps:

- manufacture of preferably sheet-form or bar-form body segments (4, 5) by the extrusion of foamed thermoplastic plastic
- longitudinal two-dimensional welding together of the body segments (4, 5) to form a block (12) of foamed material, apportioning of the block (12) of foamed material into individual structural elements (3), preferably transverse to the surface extension of the two-dimensional weld seams (3) formed between the body segments (4, 5), and thereby the generation in each case of a first face (1) on the structural elements (2) with a surface having open pores, wherein

the apportioning of the block (12) of foamed material into the structural elements (2) is executed by means of a hot element cutting process, in particular a hot wire cutting process,
wherein
the temperature of the hot element, at least at the start of a cutting process, is adjusted from a range of values between 300°C and 700°C, and between the hot element (13) and the block (12) of foamed material during the apportioning process a relative velocity is generated from a range of values between 50 mm/min and 150 mm/min, and thereby the surface of the first face (1) is partially thermally sealed, wherein the temperature of the hot element is adjusted and at the same time the relative velocity between the hot element and foam block is chosen so that the gloss value measured at 60° according to DIN 67530 form a value range between 2 and 10 is reached.

11. The method in accordance with claim 10,
**characterized in that**,
the welding together by means of two-dimensional melting of the side faces (10, 11) of the body segments (4, 5) that are to be joined, and the subsequent joining together of the same, and the hardening of the melt zones with the formation of two-dimensional weld seams (3), is executed in the form of intermediate plastic layers of low porosity ty or zero porosity.

12. The method in accordance with one of the claims 10 or 11,
**characterized in that**,
the temperature of the hot element, at least at the start of a cutting process, is adjusted from a range of values between 300°C and 700°C, preferably between 400°C and 700°C.

13. The method in accordance with one of the claims 10 to 12,
**characterized in that**,
by means of the hot element an energy per surface to be partially sealed is introduced, which is calculated in accordance with the following linear functional relationship:

$$E\ [\text{Wh/m}^2] = [\text{Whm/kg}] \times \text{density of the foam block } [\text{kg/m}^3] + b\ [\text{Wh/m}^2]$$

wherein
m is selected from a range of values between 0,12 and 0,20, preferably between 0,12 and 0,18, and b is selected from a range of values between -0.5 and +0.5, in particular between -0.5 and 0.0.

14. The method in accordance with one of the claims 10 to 13,
**characterized in that**,
a hot wire with a diameter from a range of diameters between 0.25 mm and 2.0 mm, in particular between 0.25 mm and 1.00 mm, preferably between 0.40 mm and 0.80 mm, is deployed as the hot element (13).

15. A composite sandwich element, in particular for use in the manufacture of blades for wind turbines, and/or for applications in the marine sector, and/or in the rail transport sector, and/or in mass transport on the roads, and/or for structural applications in the building sector, with a structural element (2) in accordance with one of the Claims 1 to 9 as a core layer, wherein
on the first face (1) a cover layer, in particular formed from or comprising glass fibre reinforced plastic, is affixed by means of a bonding resin (8).

16. The sandwich composite element in accordance with claim 15,
**characterized in that**,
the first cover layer, preferably also a second cover layer, is/are affixed in the infusion method.


**Revendications**

1. Element structural à utiliser comme couche de noyau dans un élément composite stratifié, dans lequel l'élément; structural (2) est formé à partir de plusieurs segments de corps (4, 5) soudés les uns aux autres en une matiére plastique thermoplastique expansée par extrusion, en particulier en PET, et dans lequel l'élément structural (2) présente un premier côté plat (1) à coller à une couche de recouvrement, dans lequel une surface du premier côté plat (1) pouvant être garnie d'une résine (8) présente des pores ouverts (6), dans lequel la surface du premier côté plat (1) est produite par découpage par un élément chaud, en particulier par découpage au fil chaud, de telle façon que la surface soit en partie thermiquement fermée, **caractérisé en ce qu'**une valeur de brillance équivalente à celle obtenue par la coupe à chaud de la surface du premier côté plat (1), mesurée à 60° selon DIN 67530-1982, vaut entre 2 et 10 unités de brillance.

2. Elément structural selon la revendication 1,
**caractérise en ce que** le dépôt de résine sur le premier côte plat (1) est compris entre 150 g/m2 et 500 g/m2

3. Elément structural selon une des revendications 1 ou 2, **caractérisé en ce que** la valeur de brillance de la surface du premier côte plat (1), mesurèe a 60° selon DIN 67530-1982, vaut entre 2 et 8, de preference entre 3 et 6 unités de brilliance.

**4.** Elément structural selon l'une quelonque des revendications précédentes, **caractérisé en ce que** l'énergie de décollement spécifique pour le décollement d'une couche de recouvrement appliquée sur le premier côté plat (1) vaut au moins 100 J/m$^2$, de préférence au moins 200 J/m2.

**5.** Elément structural selon l'une quelconque des revendications précédentes, **caractérisé en ce qu'**il est prévu un deuxième côte plat (15) parallèle au premier côté plat (1), dont la surface présente des pores ouverts (6) et peut être garnie d'une résine (8), dans lequel la surface du deuxième côté plat (15) est produite par découpage par un élément chaud, en particulier par découpage au fil chaud, de telle façon que cette surface soit en partie thermiquement fermée.

**6.** Element structural selon la revendication 5,
**Caractérisé en ce que** la tolérance sur l' épaisseur de l'élément structural (2), mesurée sur une plaque plane paralléle entre les premier et deuxième côtés plats (1, 15), vaut moins de 1 mm, de préférence moins de 0,5 mm.

**7.** Elément structural selon l'une quelconque des revendications précédentes, **caractérisé en ce qu'**il est prévu exclusivement des soudures parallèles (3) ou des 30 soudures parallèles (3) et des soudures (3) croisant, de préférence perpendiculairement, les soudures parallèles (3), qui forment une structure de nervures de renforcement.

**8.** Elément structural selon l'une quelconque des revendications précédentes, **caractérisé en ce que** la matière plastique expansée comporte principalement des cellules fermées.

**9.** Elemént structural selon l'une quelconque des revendications précédentes, **caractérisé en ce que** le premier côté plat (1) s'étend perpendiculairement à une extension de la structure polymère orientée dans la direction d'extrusion (E) et/ou perpendiculairement à une extension plate de soudures (3) prévue s entre les segments de corps (4, 5)

**10.** Procédé de fabrication d'un element structural selon l'une quelconque des revendications précédentes, comportant les étapes suivantes:

• fabriquer des segments de corps (4, 5) de préférence en forme de plaques ou de barres, par expansion par extrusion de matière plastique thermoplastique,
• assembler par soudage longitudinal à plat les segments de corps (4, 5) en un bloc de matière expansée (12),
• diviser le bloc de matiére expansée (12) en éléments structuraux individuels (2), de préférence transversalement à l'extension plate des soudures plates (3) formées entre les segments de corps (4, 5), et en l'occurrence produire à chaque fois un premier côté plat (1) sur les éléments structuraux (2) avec une surface présentant des pores ouverts, dans lequel on effectue la division du bloc de matiére expanse (12) en éléments structuraux (2) par découpage par un élément chaud, en particulier par découpage au fil chaud,

dans lequel on régie la température de l'élément chaud, au moins au début de l'opération de découpage, dans une plage de valeurs comprise entre 300°C et 700°C, et on produit entre l'élément chaud (13) et le bloc de matière expansée (12), pendant la division, une vitesse relative dans une plage de valeurs comprise entre 50 mm/min et 150 mm/min et on ferme ainsi en partie thermiquement la surface du premier côté plat (1), dans lequel la temperature de l'élément chaud est ajustée et en même temps la vitesse relative entre l'élément chaud et le bloc de mousse est sélectionnée de telle sorte que la valeur de brilliance mesurée à 60°selon DIN 67530-1982 soit obtenue dans une plage de valeurs comprise entre 2 et 10.

**11.** Procédé selon la revendication 10, caractérisén en ce que l'on effectue l'assemblage par soudage par fusion superficielle des faces latérales (10, 11) à assembler des segments de corps (4, 5) et ensuite jonction de celles-ci et durcissement des zones fondues avec formation de soudures plates (3) sous la forme de couches intermédiaires de matière plastique présentant peu ou pas de pores.

**12.** Procédé selon une des revendications 10 ou 11, **caractérisé en ce que** l'on règle la témperature de l'élément chaud, au moins au début de l'opératorin de découpage, dans une plage de valeurs comprise entre 300°C et 700°C, de preference entre 400°C et 700°C.

**13.** Procédé selon l'une quelconque des revendications 10 à 12, **caractérisé en ce que** l'on apporte au moyen de l'élément chaud une énergie par face à fermer en partie, qui se calcule selon la relation fonctionnelle linéaire suivante:

$$E \text{ [Wh/m}^2\text{]} = m \text{ [WHm/kg]} \times \text{densité du bloc de matière expansée [kg/m}^3\text{]} + b \text{ [Wh/m}^2\text{]},$$

dans laquelle m est choisi dans une plage de valeurs comprise entre 012 et 0,20, de préférence entre 0,12 et 0,18, et best choisi dans une plage de valeurs comprise entre -0,5 et +0,5, en particulier entre -0,5 et 0,0.

14. Procédé selon l'une quelconque des revendications 10 à 13, **caractérisé en ce que** l'on utilise comme élément chaud (13) un fil chaud dont le diamètre se situe dans une plage de diamètres comprise entre 0,25 mm et 2,0 mm, en particulier entre 0,25 mm et 1,00 mm, et de préférence entre 0,40 mm et 0,80 mm.

15. Elémént composite stratifié, en particulier à utiliser pour la fabrication de pales pour des éoliennes et/ou pour des applications dans le domaine de la marine et/ou dans le domaine du traffic ferroviaire et/ou dans le transport de masse sur la route et/ou pour des applications structurales dans le domaine de la construction, avec un élément structural (2) selon l'une quelconque des revendications 1 à 9 comme couche de noyau, dans lequel une couche de recouvrement, en particulier formée de ou comprenant une matière plastique renforcée par des fibres de verre, est appliquée sur le premier côté plat (1) au moyen d'une résine adhésive (8).

16. Elément composite stratifié selon la revendication 15, **caractérisé en ce que** la première couche de recouvrement, de préférence aussi une deuxième couche de recouvrement, est/sont appliquée(s) par un procédé d'infusion.

Fig. 1

Fig. 2

Fig. 3

Fig. 4

Fig. 5

Fig. 6

Fig. 7

Fig. 8

21 18 19 20

## Fig. 9

22        19 18 17 22

25        23
          22
          20

## Fig. 10

24

200

25

8

[Abmessungen in mm]

8

20

19  12

## Fig. 11

Fig. 12

Fig. 13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 602006000081 T2
- EP 1536944 B2
- WO 2005047377 A1
- WO 2004007600 A1
- US 20050060895 A1
- US 6213540 A1
- GB 2474431 A